# EUROPÄISCHE PATENTSCHRIFT

(11) **EP 1 691 103 B1**
(45) Veröffentlichungstag und Bekanntmachung des Hinweises auf die Patenterteilung: **03.10.2007**
(21) Anmeldenummer: 06002718.2
(22) Anmeldetag: 10.02.2006
(51) Int. Cl.: F16D 69/04

(54) **Bremsbelagträgerplatte**
Brake pad backing plate
Plateau de frein pour plaquette de frein

(30) Priorität: 11.02.2005 DE 102005006569; 27.07.2005 US 161240
(43) Veröffentlichungstag der Anmeldung: 16.08.2006
(62) Teilanmeldung aus: 06023885.4
(73) Patentinhaber: AML Lanxide Europe GmbH, 53340 Meckenheim (DE)
(72) Erfinder: Jung, Friedrich H., Dipl.-Ing., 65620 Waldbrunn-Ellar (DE)
(74) Vertreter: Müller, Eckhard

(56) Entgegenhaltungen:
- EP-A- 1 484 524
- WO-A-00/49308
- WO-A-02/090792
- US-A- 4 005 991
- US-A- 5 376 410

## Beschreibung

Die Erfindung betrifft eine Bremsbelagträgerplatte zum Halten eines Reibbelages, insbesondere für den Einbau in eine Fahrzeug-Bremsanlage, mit auf der Belagseite in Reihen angeordneten Haltesstrukturen für den Reibbelag, wobei jede Haltestruktur eine Vertiefung und einen Vorsprung aufweist, der Vorsprung unter Bildung der Vertiefung durch Materialverdrängung in der Oberfläche erzeugt ist und zum Eingriff mit dem Reibbelag gelangt, und Vorsprung und Vertiefung in Richtung der Reihen hintereinander liegen.

### Technologischer Hintergrund

Bei Bremsbelagträgerplatten besteht die Gefahr, dass es zu einem sogenannten Edge-Lifting des Reibbelages auf der Bremsbelagträgerplatte kommt, was bei hohen Bremsmomenten zu einem Abscheren des Bremsbelages von der Bremsbelagträgerplatte führen kann. Unter Edge-Lifting wird das Ablösen des Reibbelages an seiner äußeren Kontur beziehungsweise im Bereich seiner Kanten von der Bremsbelagträgerplatte verstanden, welches durch Eindringen von Feuchtigkeit, Wasser, Salzwasser und dergleichen in diesen Bereich und gegebenenfalls dadurch hervorgerufenes Rosten der Bremsbelagträgerplatte ausgelöst wird.

Bei den bekannten Bremsbelagträgerplatten wird das Edge-Lifting vor allem durch die im Randbereich des Reibbelages auf der Bremsbelagträgerplatte fertigungsbedingt vorhandenen Vertiefungen der Haltestrukturen begünstigt. In diesen kann sich Feuchtigkeit, Wasser, Salzwasser oder dergleichen ansammeln und dadurch zwischen Reibbelag und Bremsbelagträgerplatte gelangen.

### Stand der Technik

Eine Bremsbelagträgerplatte der hier angesprochenen Art ist aus der EP 1 484 524 A1 bekannt. Die Bremsbelagträgerplatte weist in Reihen angeordnete und jeweils einen Vorsprung und eine zugehörige Vertiefung aufweisende Haltestrukturen auf, wobei die Reihen im Wesentlichen quer zur Längsachse der Bremsbelagträgerplatte verlaufen. Die bekannte Bremsbelagträgerplatte weist jedoch in den seitlich angeordneten Reihen im Randbereich des Reibbelages Vertiefungen auf, welche noch vor dem ersten Vorsprung in der Reihe angeordnet sind. Damit kann es gerade in den kritischen Randbereichen des Bremsbelages zu einer Ansammlung von Feuchtigkeit in den Vertiefungen kommen, so dass dadurch das Edge-Lifting begünstigt ist.

Eine ähnliche Bremsbelagträgerplatte ist aus der WO 00/49 308 A1 bekannt. Dort sind jedoch die in Reihen angeordneten und jeweils einen Vorsprung aufweisenden Haltestrukturen in Richtung der Längsachse der Bremsbelagträgerplatte angeordnet.

Eine solche Anordnung der Haltestrukturen in Richtung der Längsachse ist auch bei der Bremsbelagträgerplatte der US 4 569 424 vorgesehen. Auch bei jenen Bremsbelagträgerplatten liegen die Haltestrukturen auf der Bremsbelagträgerplatte nicht in der Weise vor, dass der Edge-Lifting-Effekt vermieden ist. Da zum Erzeugen der Vorsprünge der Haltestrukturen jeweils eine Vertiefung in Form einer Nut oder Rille in den Bremsbelagträger eingearbeitet werden muss, liegt bei in Längsrichtung verlaufenden Reihen zumindest am Beginn oder Ende einer Reihe jeweils eine Vertiefung vor, in welcher sich Feuchtigkeit zwischen Belagträgerplatte und Bremsbelag ansammeln und somit einen Edge-Lifting-Effekt bewirken kann. Durch die Ausrichtung der Reihen in Längsrichtung sind zudem die beim Bremsen besonders belasteten Querkanten des Bremsbelages vom Edge-Lifting betroffen, so dass dadurch die Gefahr eines Abscherens des Bremsbelages von der Bremsbelagträgerplatte besonders groß ist.

Auch aus der US 4 799 579 A1 sind Bremsbelagträgerplatten mit Vorsprüngen und Vertiefungen aufweisenden Haltestrukturen bekannt, welche in Richtung der Längsachse der Bremsbelagträgerplatte in Reihen angeordnet sind. Dadurch besteht auch dort die Gefahr eines Edge-Lifting-Effektes, indem sich Feuchtigkeit in den am Randbereich des Bremsbelages angeordneten Vertiefungen ansammeln kann.

### Aufgabenstellung

Davon ausgehend liegt der Erfindung die Aufgabe zugrunde, eine Bremsbelagträgerplatte der eingangs genannten Art bereitzustellen, bei welcher die Gefahr eines Ablösens des Reibbelages von der Bremsbelagträgerplatte, insbesondere im Kantenbereich des Bremsbelages, verringert ist.

### Erfindung und vorteilhafte Wirkungen

Zur Lösung dieser Aufgabe ist es nach der Erfindung vorgesehen, dass die Haltestrukturen in den Reihen derart angeordnet sind, dass sich an dem nach außen weisenden Ende beziehungsweise Enden jeder Reihe ein Vorsprung befindet. Hierdurch ist es möglich, die Haltestrukturen an die äußere Kontur des Reibbelages anzupassen, ohne dass die Reihen mit Vertiefungen beginnen beziehungsweise enden. Dadurch ist ein Ansammeln von Feuchtigkeit vor dem ersten Vorsprung am Anfang der Reihen beziehungsweise nach dem letzten Vorsprung am Ende der Reihen entgegengewirkt.

Nach einer ersten Ausgestaltung der Erfindung ist es vorgesehen, dass die Haltestrukturen wenigstens zwei Abschnitte mit gegenläufiger Anordnung von Vorsprung und Vertiefung der Haltestrukturen aufweisen. Sofern die gegenläufigen Abschnitte an den gegenüberliegenden Enden der Reihen angeordnet sind, ist es hierdurch in herstellungstechnisch einfacher Weise möglich, die Bedingung zu erfüllen, dass am Anfang und Ende jeder Reihe sich jeweils ein Vorsprung oder eine Krimpe befindet. Darüber hinaus ergibt sich eine höhere Belastbarkeit der durch die Haltestrukturen realisierten Halteverbindung zwischen der Bremsbelagträgerplatte und dem Reibbelag. Es kann dadurch der Reibbelag höhere Bremskräfte aufnehmen, ohne dass es zu einem Abscheren des Reibbelages von der Bremsbelagträgerplatte kommt. Sofern die freien Enden der Vorsprünge beziehungsweise Krimpen nach vorne oder beispielsweise in Art eines Spanes nach hinten weisen, kann der Reibbelag dadurch auch in einer Richtung senkrecht zur Oberfläche des Reibbelages wirkende höhere Kräfte, welche beispielsweise beim Lüften der Bremse auftreten, aufnehmen.

Eine weitere Ausgestaltung der Erfindung besteht darin, dass die Reihen im Wesentlichen in Richtung der Längsachse der Bremsbelagträgerplatte verlaufen. Insofern sind die Reihen in oder entgegen der Richtung der beim Bremsen an der Bremsbelagträgerplatte beziehungsweise dem Reibbelag wirkenden Abscherkräfte angeordnet. Durch diese Maßnahme ist erreicht, dass gerade an den besonders belasteten, in Querrichtung verlaufenden Kanten des Reibbelages am Anfang und Ende der Reihen keine Vertiefung, sondern stets ein Vorsprung vorliegt und damit einem Edge-Lifting-Effekt vorgebeugt ist. Einem Abscheren des Reibbelages von der Bremsbelagträgerplatte ist damit besonders wirkungsvoll entgegengewirkt.

Alternativ ist es möglich, dass die Reihen im Wesentlichen quer zur Längsachse der Bremsbelagträgerplatte verlaufen. Eine solche Anordnung ist herstellungstechnisch einfach realisierbar und ermöglicht auch in den kritischen Kantenbereichen des Reibbelages eine Anpassung der Haltestrukturen an die jeweils vorliegende Reibbelagkontur, ohne dass die Reihen mit Vertiefungen beginnen beziehungsweise enden. Insbesondere ist dadurch eine Anordnung der Haltestrukturen auf der Bremsbelagträgerplatte erreicht, welche optimale Haltebedingungen für den Reibbelag gewährleistet.

Dabei bietet es sich an, dass die Reihen in ihrer Längserstreckung fächerförmig ausgerichtet sind.

Bei im Wesentlichen quer zu ihrer Längsachse verlaufenden und fächerförmig in ihrer Längserstreckung angeordneten Reihen wird insbesondere der Kontur des Reibbelages bei den üblichen Scheibenbremsen Rechnung getragen.

Bei im Wesentlichen in Querrichtung der Bremsbelagträgerplatte verlaufenden Reihen bietet es sich an, dass die Reihen - bezogen auf die Einbaulage der Bremsbelagträgerplatte - in radialer Richtung nach außen divergieren. Hierdurch ergeben sich günstige Haltebedingungen für den Reibbelag, insbesondere bei den üblichen Scheibenbremsen, da die Haltestrukturen dadurch beim Bremsen weniger belastet sind und damit die Gefahr eines Abscherens des Reibbelages verringert ist.

Es kann natürlich auch vorgesehen sein, dass die fächerförmig angeordneten Reihen in Längsrichtung der Bremsbelagträgerplatte verlaufen.

Nach einer Weiterbildung der Erfindung ist es vorgesehen, dass die Position des Vorsprungs und der Vertiefung der Haltestrukturen zwischen benachbarten Reihen alterniert. Sofern die freien Enden der Vorsprünge in eine Richtung weisen, d.h. in Fertigungsrichtung der Haltestrukturen der betreffenden Reihe zur folgenden oder vorhergehenden Haltestruktur, weisen die Vorsprünge benachbarter Reihen in diesem Fall aufeinander zu. Auch hierdurch kann einem sogenannten Edge-Lifting wirksam entgegengewirkt werden, da an beiden Kantenbereichen des Reibbelages, in welche sich die Reihen mit ihren beiden Enden erstrecken, neben einer Vertiefung stets ein Vorsprung der benachbarten Reihe angeordnet ist.

Eine vorteilhafte weiterbildung besteht darin, dass bei gegenläufig angeordneten Haltestrukturen benachbarter Reihen, in Fertigungsrichtung der Haltestrukturen gesehen, der Anfang jeder Reihe gegenüber dem Ende der jeweils benachbarten Reihe in Richtung zur Mitte der Bremsbelagträgerplatte verschoben ist. Auf diese Weise ist es möglich, dass - in Fertigungsrichtung gesehen - im Kantenbereich des Reibbelages keine Vertiefung liegt, sondern lediglich Vorsprünge.

Es bietet sich dabei an, wenn die Haltestrukturen benachbarter Reihen versetzt zueinander angeordnet sind, wobei vorzugsweise im Bereich der Vertiefungen einer Reihe jeweils ein Vorsprung der jeweils benachbarten Reihe zu Liegen kommt. Dadurch ist vermieden, dass die Vertiefungen benachbarter Reihen unmittelbar nebeneinander zu liegen kommen und damit ein durchgehender Kriechweg für Feuchtigkeit, Schmutzwasser, Salzwasser und dergleichen vorhanden ist.

Eine alternative Ausgestaltung der Erfindung sieht vor, dass die Bremsbelagträgerplatte wenigstens zwei Bereiche mit jeweils aufeinanderzu laufenden, fächerförmig ausgerichteten Reihen von Haltestrukturen aufweist, wobei die Haltestrukturen des einen Bereichs gegenläufig zu den Haltestrukturen des anderen Bereiches ausgerichtet sind. Hierdurch ist ein die Bremsbelagträgerplatte schonenden Herausarbeiten der Haltestrukturen möglich, da die zur Herstellung der Haltestrukturen auf den einen Bereich wirkenden Kräfte und die auf den anderen Bereich wirkenden Kräfte sich weitgehend gegenseitig aufheben. Das ist insbesondere dann der Fall, wenn die zwei Bereich spiegelsymmetrisch zur Mittelquerachse und/oder zur Mittellängsachse der Bremsbelagträgerplatte angeordnet sind.

Es bietet sich an, wenn die Reihen der beiden Bereiche in entgegen gesetzte Richtung divergieren. Hierdurch lassen sich insbesondere große Bremsbelagträgerplatten in herstellungstechnisch einfacher Weise mit den Haltestrukturen versehen, indem in zwei aufeinanderfolgenden Arbeitsgängen zuerst die Haltestrukturen des einen Bereiches und dann nach Umspannungen der Bremsbelagträgerplatte in der die Vorsprünge erzeugenden Vorrichtung die Reihen des zweiten Bereiches erzeugt werden können.

In die gleiche Richtung zielt die alternative Maßnahme, dass die Reihen der beiden Bereiche in Richtung zur Mitte der Bremsbelagträgerplatte divergieren.

Nach einer weiteren alternativen Maßnahme kann es auch vorgesehen sein, dass die Reihen der beiden Bereiche in die gleiche Richtung divergieren.

In diesem Fall bietet es sich an, wenn die Reihen ein im Wesentlichen gleiches Konvergenzzentrum aufweisen. Dies ist insbesondere dann von Vorteil, wenn die Reihen der beiden Bereiche gleichzeitig in einem Arbeitstakt hergestellt werden, da dadurch das zum Erzeugen dieser Reihen erforderliche Werkzeug einfach hergestellt werden kann.

Dabei ist es von Vorteil, wenn die beiden Bereiche sich im Randbereich ihrer einander zugewandten Seiten derart überschneiden, dass zwischen den Enden benachbarter Reihen des einen Bereiches die Enden der Reihen des anderen Bereiches liegen. Dadurch ist gerade in dem beim Bremsen besonders stark belasteten Bereich der Bremsbelagträgerplatte eine hohe Haltewirkung des Reibbelages auf der Bremsbelagträgerplatte aufgrund der großen Anzahl an Vorsprüngen gewährleistet.

Die Herstellung des Werkzeuges zur Bearbeitung der Bremsbelagträgerplatte gestaltet sich besonders einfach, wenn die aneinander angrenzenden Haltestrukturen benachbarter Reihen jeweils auf einem Radius liegen.

Von Vorteil ist es ferner, wenn die Haltestrukturen zumindest im Randbereich des Reibbelages angeordnet sind. Zur Vermeidung des Edge-Liftings reicht es nämlich bereits aus, wenn die Haltestrukturen im Randbereich des Reibbelages vorliegen. Es ist dazu an sich nicht mehr erforderlich, auch die innere Fläche der Bremsbelagträgerplatte vollständig mit Haltestrukturen zu versehen. Jedoch ist durch eine ganzflächige Anordnung von Haltestrukturen auf zusätzlich eine höhere Aufnahme von Bremskräften erzielt.

Von Vorteil ist es, wenn die Vorsprünge eine Höhe h von 1,40 mm bis 1,8 mm, vorzugsweise 1,6 mm, aufweisen. In diesem Bereich kann eine besonders gute Verbindung des Reibbelages auf der Bremsbelagträgerplatte erreicht und einem Edge-Lifting entgegengewirkt werden.

In die gleiche Richtung geht die Maßnahme, dass die Vorsprünge in einem Winkel α von etwa 80° bis 84° zur Oberfläche der Bremsbelagträgerplatte, vorzugsweise in Richtung zur jeweils zugeordneten Vertiefung, ausgerichtet sind.

Es bietet sich an, wenn die Bremsbelagträgerplatte gekrümmt oder im Wesentlichen flach ausgebildet ist. Dadurch kann die Bremsbelagträgerplatte nicht nur in einer Scheibenbremsanlage, sondern auch in einer Trommelbremsanlage verwendet werden.

### Ausführungsbeispiele

Weitere Vorteile und Anwendungsmöglichkeiten der vorliegenden Erfindung ergeben sich aus der nachfolgenden Beschreibung mehrerer Ausführungsbeispiele anhand der Figuren 1 bis 5 und 8 bis 15.

Es zeigen:
- Figur 1: eine mögliche Ausführungsform einer erfindungsgemäßen Bremsbelagträgerplatte zum Halten eines Reibbelages in perspektivischer Ansicht,
- Figur 2: die Bremsbelagträgerplatte gemäß Figur 1 als Draufsicht,
- Figur 3: die Bremsbelagträgerplatte gemäß Figur 1 als Seitenansicht,
- Figur 4: die Bremsbelagträgerplatte gemäß Figur 1 als Schnittdarstellung entlang der Schnittlinie A-A gemäß Figur 2,
- Figur 5: die Haltestruktur der Bremsbelagträgerplatte gemäß Figur 1 als Darstellung des Details B gemäß Figur 4,
- Figur 6: eine Bremsbelagträgerplatte als Draufsicht, außerhalb des Umfangs der beanspruchten Erfindung,
- Figur 7: eine Weiterbildung der Bremsbelagträgerplatte gemäß Figur 6 als Draufsicht,
- Figur 8: ein wiederum anderes Ausführungsbeispiel einer erfindungsgemäßen Bremsbelagträgerplatte als perspektivische Darstellung,
- Figur 9: die Bremsbelagträgerplatte gemäß Figur 8 als Draufsicht,
- Figur 10: die Bremsbelagträgerplatte gemäß Figur 8 als Schnittdarstellung entlang der Schnittlinie A-A gemäß Figur 9,
- Figur 11: die Haltestruktur der Bremsbelagträgerplatte gemäß Figur 8 als Darstellung des Details B gemäß Figur 10 und
- Figur 12: ein weiteres Ausführungsbeispiel einer erfindungsgemäßen Bremsbelagträgerplatte als Draufsicht,
- Figur 13: die Bremsbelagträgerplatte gemäß Figur 12 als Schnittdarstellung entlang der Schnittlinie A-A,
- Figur 14: die Haltestruktur der Bremsbelagträgerplatte gemäß Figur 12 als Darstellung des Details B gemäß Figur 13,
- Figur 15: ein weiteres Ausführungsbeispiel einer erfindungsgemäßen Bremsbelagträgerplatte als Draufsicht,
- Figur 16: ein anderes Ausführungsbeispiel einer Bremsbelagträgerplatte als Draufsicht, außerhalb des Umfangs der beanspruchten Erfindung,
- Figur 17: ein weiteres Ausführungsbeispiel einer Bremsbelagträgerplatte als Draufsicht außerhalb des Umfangs der beanspruchten Erfindung, und
- Figur 18: eine weitere alternative Ausführungsform einer Bremsbelagträgerplatte als Draufsicht außerhalb des Umfangs der beanspruchten Erfindung.

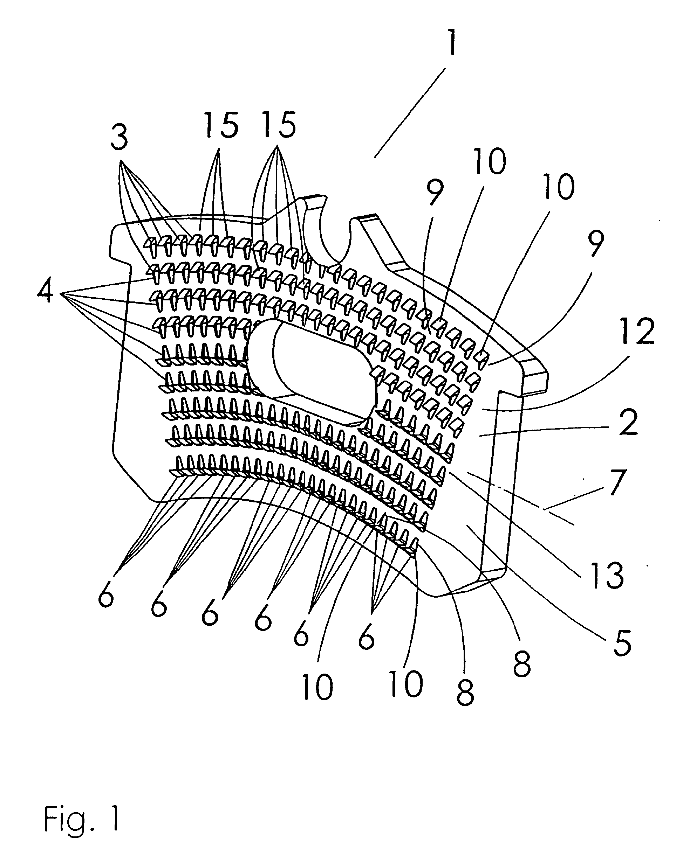

In den Figuren 1 bis 4 ist eine Bremsbelagträgerplatte 1 zum Halten eines Reibbelages dargestellt, wie sie beispielsweise in einer Fahrzeug-Bremsanlage verwendet wird. Eine solche Bremsanlage kann beispielsweise eine Scheibenbremse sein. Grundsätzlich kann die Bremsbelagträgerplatte auch in einer Trommelbremse oder einer anderen Art von Bremsanlage eingesetzt werden.

Die Bremsbelagträgerplatte 1 weist auf der Belagseite 2 in Reihen 6 angeordnete Halterstrukturen 15 für den (nicht dargestellten) Reibbelag auf. Jede Haltestruktur 15 enthält einen Vorsprung 3 und eine Vertiefung 4, wobei der Vorsprung 3 unter Bildung der Vertiefung 4 durch Materialverdrängung in der Oberfläche 5 erzeugt ist und in Eingriff mit dem (nicht dargestellten) Reibbelag gelangt.

Die Reihen 6 verlaufen im Wesentlichen quer zur Längsachse 7 der Bremsbelagträgerplatte 1 und sind fächerförmig angeordnet, und zwar in der Weise, dass die Reihen 6 - bezogen auf die Einbaulage der Bremsbelagträgerplatte 1 - in der Bremsanlage nach radial außen divergieren. Ferner liegen die aneinander angrenzenden Haltestrukturen 15 benachbarter Reihen 6 jeweils auf einem Radius 11.

Bei dem vorliegenden Ausführungsbeispiel sind die Haltestrukturen 15 in den Reihen 6 derart angeordnet, dass am Anfang 8 und am Ende 9 jeder Reihe 6 sich ein Vorsprung 10 befindet. Die Reihen 6 weisen ferner zwei Abschnitte 12, 13 auf, in denen die Positionen von Vorsprung 3 und Vertiefung 4 der Haltestrukturen 15 gegenläufig ist oder alterniert. Weiterhin sind die einzelnen Reihen 6 mit Haltestrukturen 15 so angeordnet, dass sie an den Rand des (nicht dargestellten) Reibbelages angrenzen.

Nach einem hier nicht dargestellten Ausführungsbeispiel ist es selbstverständlich auch möglich, dass die Haltestrukturen 15 lediglich im Randbereich des Reibbelages angeordnet sind.

Bei dem Ausführungsbeispiel gemäß Figur 1 sind die Vorsprünge als Krimpen 3 ausgebildet, wobei die freien Enden der Krimpen zurückgebogen, bspw. auf die jeweils zugehörige Vertiefung 4 gerichtet sind.

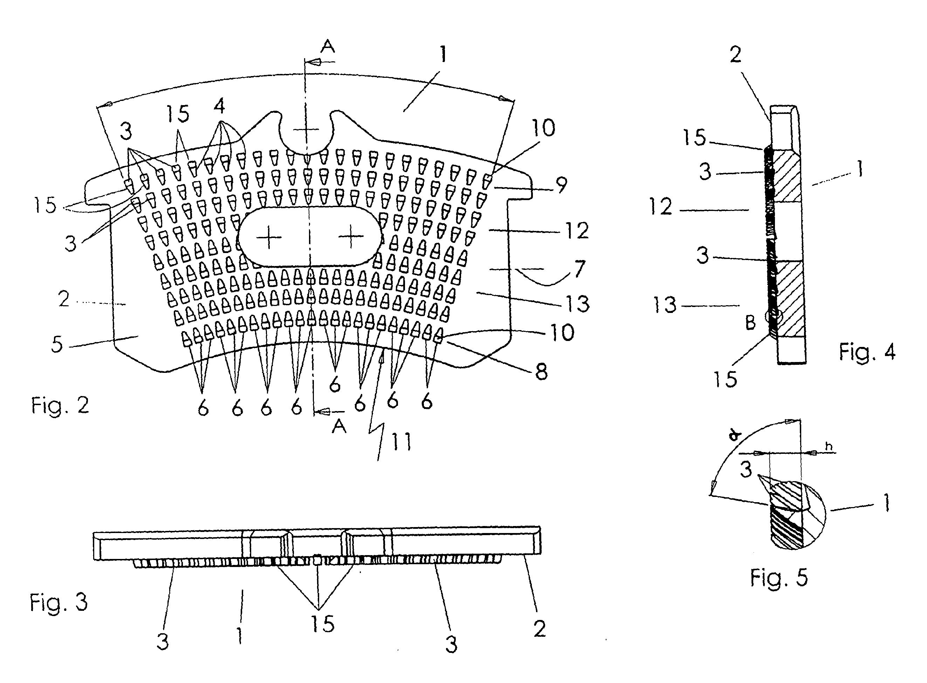

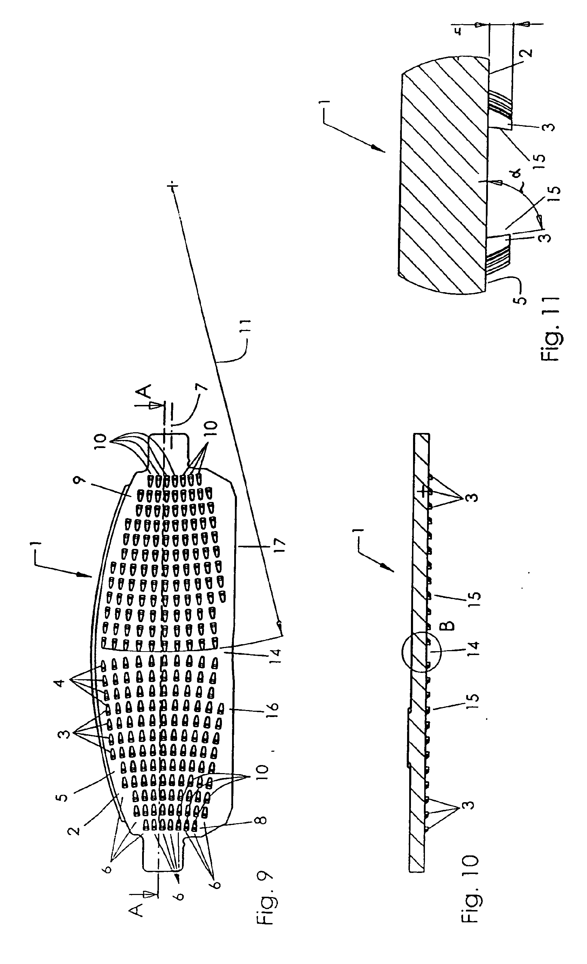

Wie aus den Figuren 5 und 11 ersichtlich, können die Krimpen beziehungsweise Vorsprünge 3 eine Höhe h von etwa 1,6 mm aufweisen und in einem Winkel α von etwa 80° bis 84° zur Oberfläche 5 der Bremsbelagträgerplatte 1 in Richtung zur jeweils zugeordneten Vertiefung 4 stehen. Selbstverständlich können die Vorsprünge 3, auch andere Höhen aufweisen und in anderer Weise ausgebildet sein, beispielsweise in Form von Stiften, Zähnen, Spänen oder dergleichen.

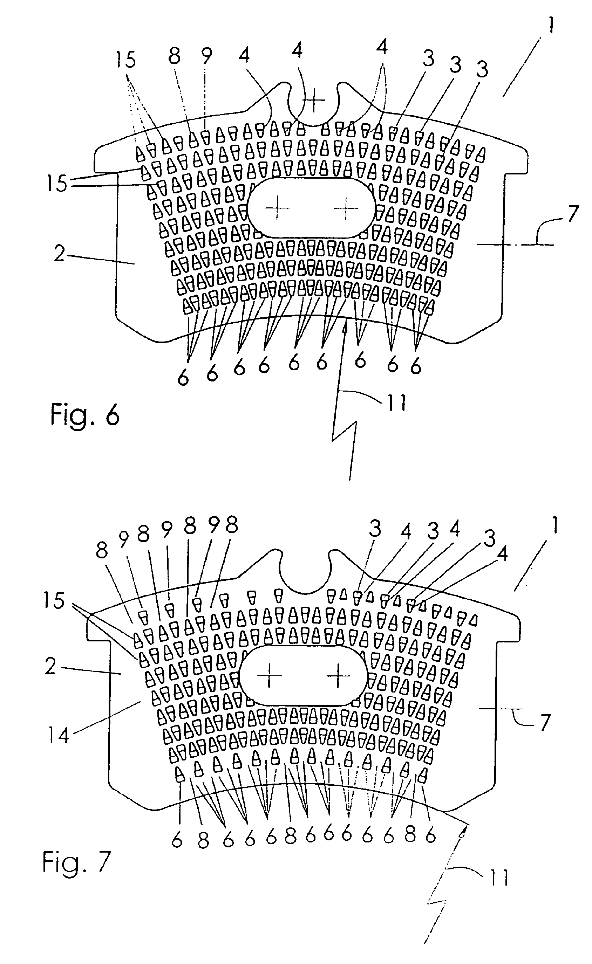

In Figur 6 ist ein weiteres Ausführungsbeispiel der Bremsbelagträgerplatte 1 dargestellt. Es unterscheidet sich von dem Ausführungsbeispiel gemäß Figur 1 unter anderem dadurch, dass die Position des Vorsprungs 3 und der Vertiefung 4 der Haltestrukturen 15 zwischen benachbarten Reihen 6 alterniert. Dadurch grenzen die herstellungsbedingt mit einer Vertiefung 4 beginnenden Reihen 6 im Randbereich des Reibbelages jeweils an einen Vorsprung 3 am - in Fertigungsrichtung der Haltestrukturen gesehenen - Ende der jeweils benachbarten Reihe an. Am Anfang und Ende der Reihe 6 alternieren daher Vertiefungen 4 und Vorsprünge 3.

Eine Weiterbildung des Ausführungsbeispiels der Belagträgerplatte 1 gemäß Figur 6 zeigt Figur 7. Die dort dargestellte Bremsbelagträgerplatte 1 unterscheidet sich unter anderem von dem Ausführungsbeispiel gemäß Figur 6 darin, dass in Fertigungsrichtung der Haltestrukturen 15 gesehen, der Anfang 8 jeder Reihe 6 gegenüber dem Ende 9 der jeweils benachbarten Reihen 6 in Richtung zur Mitte 14 der Bremsblagträgerplatte 1 verschoben ist.

Nach einem weiteren, hier nicht dargestellten Ausführungsbeispiel ist es darüber hinaus möglich, dass die Haltestrukturen 15 benachbarter Reihen 6 versetzt zueinander angeordnet sind, so dass also im Bereich der Vertiefung 4 einer Reihe ein Vorsprung 3 der benachbarten Reihe 6 zu liegen kommt.

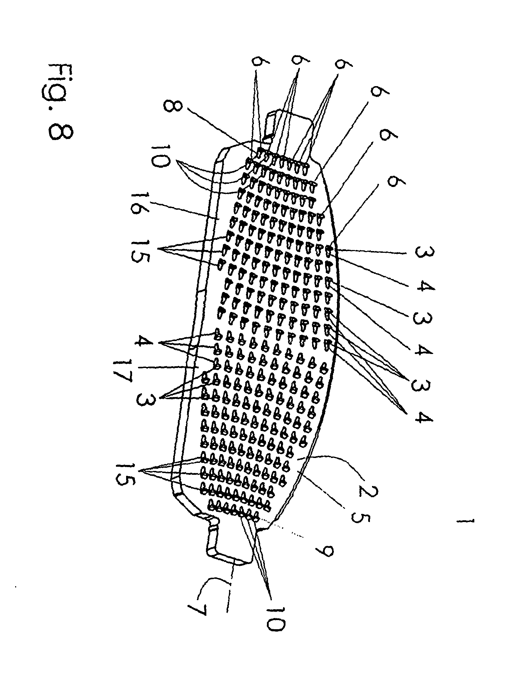

Die Figuren 8 bis 11 zeigen wiederum ein anderes Ausführungsbeispiel der Bremsbelagträgerplatte 1. Elemente der Bremsbelagträgerplatte 1, welche mit denen der vorstehend ausgeführten Ausführungsbeispiele der Bremsbelagträgerplatten gleich sind, sind mit gleichen Bezugszeichen versehen, insoweit wird auf die Beschreibung zu den vorstehenden Ausführungsbeispielen verwiesen. Das Ausführungsbeispiel gemäß den Figuren 8 bis 11 unterscheidet sich von den vorhergehenden Ausführungsbeispielen gemäß der Figuren 1, 6 und 7 unter anderem dadurch, dass die Reihen 6 im Wesentlichen in Richtung der Längsachse 7 der Bremsbelagträgerplatte 1 gefächert verlaufen. Dabei ist die Bremsbelagträgerplatte 1 in zwei Bereiche 16, 17 mit jeweils fächerförmig angeordneten Reihen 6 mit Haltestrukturen 15 aufgeteilt, wobei die beiden Bereiche 16, 16 eine gegenläufige Anordnung von Vorsprung 3 und Vertiefung 4 der Haltestrukturen 15 aufweisen. Anders als im Ausführungsbeispiel gemäß Figur 1 divergieren die Reihen 6 der beiden Bereiche 16, 17 bei diesem Ausführungsbeispiel in Richtung zur Mitte 14 der Bremsbelagträgerplatte 1 hin.

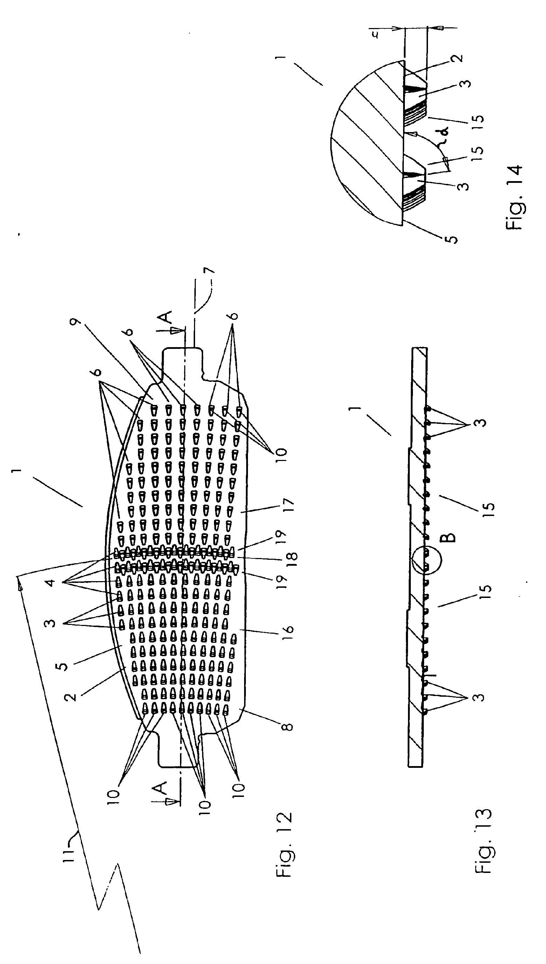

Die Figuren 12 bis 14 zeigen eine Weiterbildung des Ausführungsbeispieles der Bremsbelagträgerplatte 1 gemäß der Figuren 8 bis 11. Gleiche Elemente sind wiederum mit gleichen Bezugszeichen versehen; insoweit wird auf die Ausführungen zu den Figuren 8 bis 11 verwiesen. Das Ausführungsbeispiel gemäß der Figuren 12 bis 14 unterscheidet sich von dem Ausführungsbeispiel gemäß der Figuren 8 bis 11 darin, dass die Reihen 6 der beiden Bereiche 16, 17 in die gleiche Richtung divergieren, wobei sie ein im wesentlichen gleiches Konvergenzzentrum aufweisen. Darüber hinaus überschneiden sich die beiden Bereiche 16, 17 im Randbereich 18 ihrer einander zugewandten Seiten 19 derart, dass zwischen den Enden benachbarter Reihen 6 des einen Bereiches 16 die Enden der Reihen 6 des anderen Bereiches 17 liegen. Beispielsweise kann die Überschneidung im Randbereich 19 jeweils zwei Haltestrukturen 15 der Reihen 6 der Bereiche 16, 17 umfassen. Auch ist es möglich, dass sich mehr oder weniger Haltestrukturen 15 der Bereiche 16, 17 überschneiden.

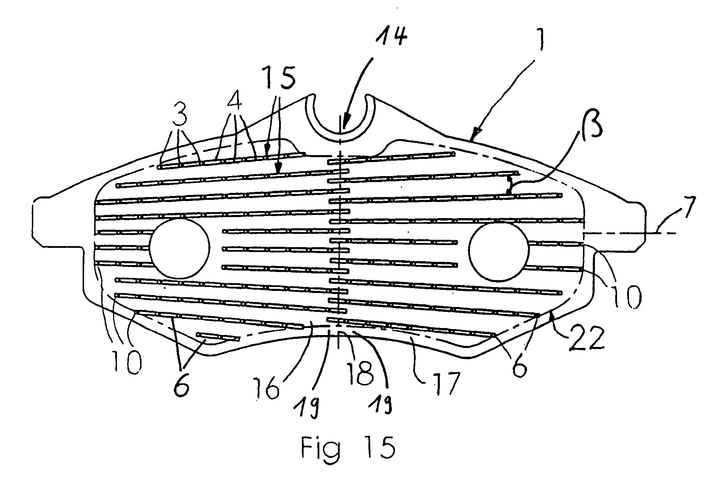

Figur 15 zeigt ein weiteres Ausführungsbeispiel der Bremsbelagträgerplatte 1. Teile der Bremsbelagträgerplatte 1, welche mit den Teilen der vorhergehenden Ausführungsformen gemäß der Figuren 1 bis 14 gleich sind, sind mit gleichen Bezugszeichen versehen. Insofern wird auf die Beschreibung zu den vorhergehenden Ausführungsbeispielen verwiesen.

Bei der Ausführungsform gemäß Figur 15 weist die Bremsbelagträgerplatte 1 ebenfalls - wie bei den Ausführungsformen gemäß der Figuren 8 bis 14 - die beiden Bereiche 16, 17 auf, welche in ihrer Längserstreckung fächerförmig ausgerichtet sind. Dabei verlaufen die Reihen 6 der Bereiche 16, 17 in Richtung zur Längsachse 7 der Bremsbelagträgerplatte 1. Die durch die Vorsprünge 3 und Vertiefungen 4 gebildeten Haltestrukturen 15 sind in den Reihen 6 des einen Bereiches 16 gegenläufig zu den Haltestrukturen 15 der Reihen 6 des anderen Bereiches 17 ausgerichtet. Dabei divergieren die fächerförmig ausgerichteten Reihen 6 der beiden Bereiche 16, 17 in gleicher Richtung.

Wie bereits bei dem Ausführungsbeispiel gemäß den Figuren 12 bis 14 dargestellt, ist es auch bei dem Ausführungsbeispiel gemäß der Figur 15 vorgesehen, dass sich die beiden Bereiche 16, 17 im Randbereich 18 ihrer einander zugewandten Seiten 19 überschneiden. Vorzugsweise kommen im Überschneidungsbereich die Enden benachbarter Reihen 6 des einen Bereiches 16 zwischen den Enden der Reihen 6 des anderen Bereiches 17 zu liegen. Die Haltestrukturen 15 in den Reihen 6 sind derart angeordnet, dass sich an den nach außen weisenden Enden 8, 9 jeder Reihe 6 ein Vorsprung 10 befindet. Die Reihen 6 der beiden Bereiche 16, 17, welche jeweils im Bereich der Mitte 14 der Bremsbelagträgerplatte 1 beginnen, weisen dort jeweils eine Vertiefung auf. Bei der vorliegenden fächerförmigen Ausrichtung der Reihen liegt der Winkel β zwischen benachbarten Reihen zwischen etwa 0° und etwa 15°.

Die strichpunktierte Linie 22 zeigt die Kontur des Reibbelages, bis zu dessen Randbereich sich Haltestrukturen 15 erstrecken. Insofern liegt hier ein Unterschied zum Ausführungsbeispiel gemäß der Figuren 12 und 13 vor, bei dem Anordnung der Haltestrukturen für einen Reibbelag anderer Kontur vorgesehen sind.

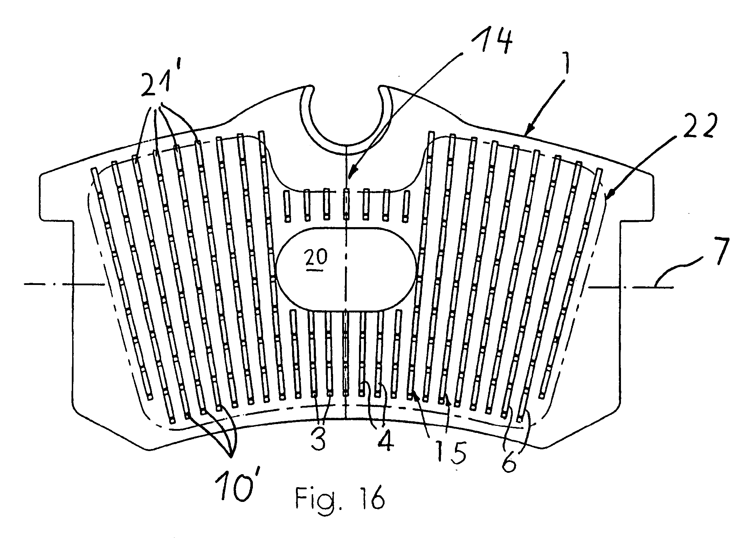

In Ergänzung zu den Ausführungsformen der Bremsbelagträgerplatte 1 gemäß den Figuren 1 bis 7 zeigt Figur 16 ein weiteres Ausführungsbeispiel der Bremsbelagträgerplatte 1. Auch dort sind die Reihen 6 mit den Haltestrukturen 15 im wesentlichen quer zur Längsachse 7 der Bremsbelagträgerplatte 1 angeordnet, wobei die Reihen 6 vorzugsweise in ihrer Längsrichtung fächerförmig ausgerichtet sind. Dabei divergieren die Reihen 6 bezogen auf die Einbaulage der Bremsbelagträgerplatte 1 in radialer Richtung nach außen. Bei dieser Ausführungsform liegen lediglich bei den in radialer Richtung nach innen weisenden Enden jeder Reihe 6 ein Vorsprung 10' vor. Dagegen befindet sich an den in radialer Richtung nach außen weisenden Enden jeder Reihe 6 jeweils eine Vertiefung 21'. Die Position von Vorsprung 3 und Vertiefung 4 der Haltestrukturen 15 zwischen benachbarten Reihen 6 ist insofern bei dieser Ausführungsform nicht alternierend, sondern gleichgerichtet. Im Bereich der Mitte 14 weist die Bremsbelagträgerplatte 1 eine ovale Öffnung 20 auf.

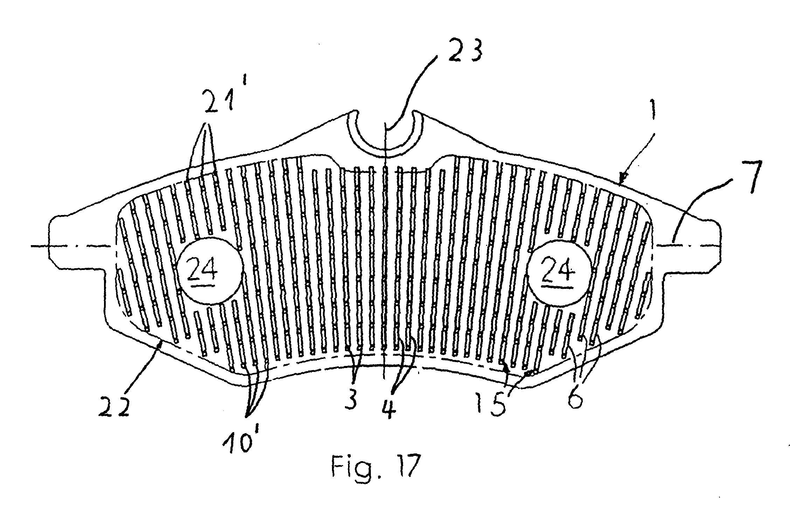

Figur 17 zeigt ein weiteres Ausführungsbeispiel der Bremsbelagträgerplatte 1, welches sich von der Ausführungsform gemäß Figur 16 unter anderem dadurch unterscheidet, dass dort zwei im wesentlichen kreisrunde Öffnungen 24 vorgesehen sind, welche spiegelsymmetrisch bezüglich der Querachse 23 der Bremsbelagträgerplatte 1 und in Abstand zueinander angeordnet sind. Die Haltestrukturen 15 sind auf der Bremsbelagträgerplatte 1 derart angeordnet, dass ein Reibbelag mit anderer Kontur 22 als bei der Ausführungsform gemäß Figur 16 eingesetzt werden kann.

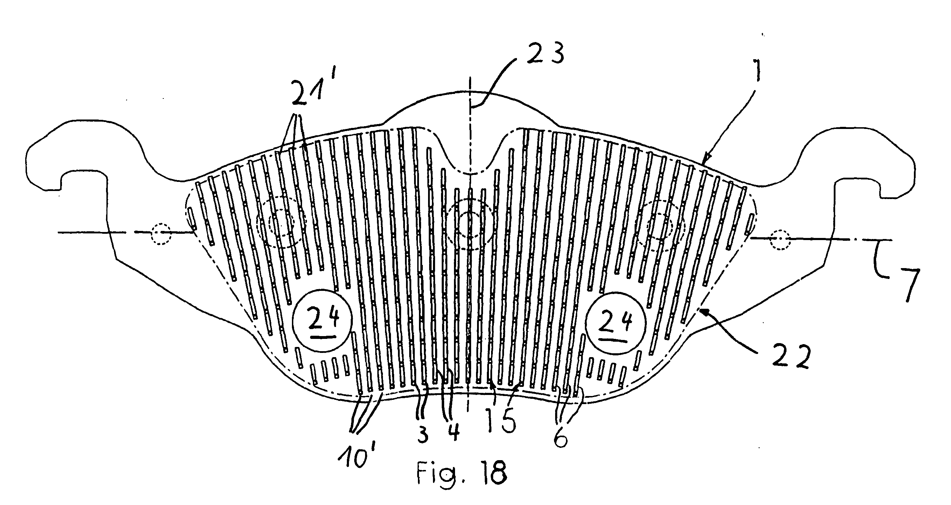

Figur 18 zeigt eine weitere Ausführungsform der Bremsbelagträgerplatte 1. Sie stellt quasi eine Weiterbildung der Ausführungsformen gemäß der Figuren 16 und 17 dar, wobei die Haltestrukturen 15 im Randbereich derart gestaltet sind, dass wiederum eine andere Reibbelag-Kontur mit der Bremsbelagträgerplatte 1 eingesetzt werden kann. Auch zeigt diese Ausführungsform der Bremsbelagträgerplatte 1 eine alternative äußere Kontur zum Einbau in anderen Fahrzeugen.

### Bezugszeichenliste

- 1: Bremsbelagträgerplatte
- 2: Belagseite
- 3: Vorsprung, Krimpe
- 4: Vertiefung
- 5: Oberfläche
- 6: Reihen
- 7: Längsachse
- 8: Anfang
- 9: Ende
- 10: Vorsprung
- 10': Vorsprung
- 11: Radius
- 12: Abschnitt
- 13: Abschnitt
- 14: Mitte
- 15: Haltestrukturen
- 16: Bereich
- 17: Bereich
- 18: Randbereich
- 19: Seiten
- 20: Öffnung
- 21': Vertiefung
- 22: Kontur des Reibbelages
- 23: Querachse
- 24: Öffnung

- h: Höhe
- α: Winkel
- β: Winkel

## Patentansprüche

1. Bremsbelagträgerplatte (1) zum Halten eines Reibbelages, insbesondere für den Einbau in eine Fahrzeug-Bremsanlage, mit auf der Belagseite (2) in Reihen (6) angeordneten Haltestrukturen (15) für den Reibbelag, wobei jede Haltestruktur (15) eine Vertiefung (4) und einen Vorsprung (3) aufweist, der unter Bildung der Vertiefung (4) durch Materialverdrängung in der Oberfläche (5) erzeugt ist und in Eingriff mit dem Reibbelag gelangt, und Vorsprung (3) und Vertiefung (4) in Richtung der Reihen (6) hintereinander liegen, **dadurch gekennzeichnet, dass** die Haltestrukturen (15) in den Reihen (6) derart angeordnet sind, dass sich an dem nach außen weisenden Ende (8; 9) bzw. Enden (8, 9) jeder Reihe (6) ein Vorsprung (10) befindet.

2. Bremsbelagträgerplatte nach Anspruch 1, **dadurch gekennzeichnet, dass** die Reihen (6) wenigstens zwei Abschnitte (12, 13) mit gegenläufiger Anordnung von Vorsprung (3) und Vertiefung (4) der Haltestrukturen (15) aufweisen.

3. Bremsbelagträgerplatte nach Anspruch 1 oder 2, **dadurch gekennzeichnet, dass** die Reihen (6) im Wesentlichen quer zur Längsachse (7) der Bremsbelagträgerplatte (1) verlaufen.

4. Bremsbelagträgerplatte nach Anspruch 1 oder 2, **dadurch gekennzeichnet, dass** die Reihen (6) im Wesentlichen in Richtung der Längsachse (7) der Bremsbelagträgerplatte (1) verlaufen.

5. Bremsbelagträgerplatte (1) nach einem der vorhergehenden Ansprüche, **dadurch gekennzeichnet, dass** die Reihen (6) in ihrer Längserstreckung fächerförmig ausgerichtet sind.

6. Bremsbelagträgerplatte nach Anspruch 5, **dadurch gekennzeichnet, dass** bei im Wesentlichen in Querrichtung der Bremsbelagträgerplatte (1) verlaufenden Reihen (6) diese, bezogen auf die Einbaulage der Bremsbelagträgerplatte (1), in radialer Richtung nach außen divergieren.

7. Bremsbelagträgerplatte nach Anspruch 6, **dadurch gekennzeichnet, dass** die Position von Vorsprung (3) und Vertiefung (4) der Haltestrukturen (15) zwischen benachbarten Reihen (6) alterniert.

8. Bremsbelagträgerplatte nach Anspruch 7, **dadurch gekennzeichnet, dass** bei gegenläufig angeordneten Haltestrukturen (15) benachbarter Reihen (6) in Fertigungsrichtung der Haltestrukturen (15) gesehen der Anfang (8) jeder Reihe (6) gegenüber dem Ende (9) der jeweils benachbarten Reihe (6) in Richtung zur Mitte (14) der Bremsbelagträgerplatte (1) versetzt ist.

9. Bremsbelagträgerplatte nach einem der Ansprüche 6 bis 8, **dadurch gekennzeichnet, dass** die Haltestrukturen (15) benachbarter Reihen (6) versetzt zueinander angeordnet sind, wobei vorzugsweise im Bereich der Vertiefungen (4) einer Reihe (6) jeweils ein Vorsprung (3) der jeweils benachbarten Reihe zu liegen kommt.

10. Bremsbelagträgerplatte nach einem der Ansprüche 5 bis 9, **gekennzeichnet durch** wenigstens zwei Bereiche (16, 17) mit jeweils aufeinanderzu laufenden, fächerförmig ausgerichteten Reihen (6) von Haltestrukturen (15), wobei die Haltestrukturen (15) des einen Bereichs (16) gegenläufig zu den Haltestrukturen (15) des anderen Bereichs (17) ausgerichtet sind.

11. Bremsbelagträgerplatte nach Anspruch 10, **dadurch gekennzeichnet, dass** die Reihen (6) der beiden Bereiche (16, 17) in entgegengesetzter oder gleicher Richtung divergieren.

12. Bremsbelagträgerplatte nach Anspruch 10 oder 11, **dadurch gekennzeichnet, dass** bei in die gleiche Richtung divergierenden Reihen (6) der zwei Bereiche (16, 17) die Reihen (6) ein im Wesentlichen gleiches Konvergenzzentrum aufweisen.

13. Bremsbelagträgerplatte nach Anspruch 10, **dadurch gekennzeichnet, dass** die Reihen (6) der beiden Bereiche (16, 17) in Richtung zur Mitte (14) der Bremsbelagträgerplatte (1) divergieren.

14. Bremsbelagträgerlatte nach einem der Ansprüche 10 bis 13, **dadurch gekennzeichnet, dass** die beiden Bereiche (16, 17) sich im Randbereich (18) ihrer einander zugewandten Seiten (19) derart überschneiden, dass zwischen den Enden benachbarter Reihen (6) des einen Bereiches (16) die Enden der Reihen (6) des anderen Bereiches (17) liegen.

15. Bremsbelagträgerplatte nach einem der Ansprüche 10 bis 14, **dadurch gekennzeichnet, dass** die wenigstens zwei Bereiche (16, 17) spiegelsymmetrisch zur Mittelquerachse und/oder zur Mittellängsachse der Bremsbelagträgerplatte angeordnet sind.

16. Bremsbelagträgerplatte nach einem der vorhergehenden Ansprüche, **dadurch gekennzeichnet, dass** die aneinander angrenzenden Haltestrukturen (15) benachbarter Reihen (6) jeweils auf einem Radius (11) liegen.

17. Bremsbelagträgerplatte nach einem der vorhergehenden Ansprüche, **dadurch gekennzeichnet, dass** die Haltestrukturen (15) zumindest im Randbereich des Reibbelages angeordnet sind und vorzugsweise an den Rand des Reibbelages angrenzen.

18. Bremsbelagträgerplatte nach einem der vorhergehenden Ansprüche, **dadurch gekennzeichnet, dass** die Vorsprünge (3) eine Höhe h von 1,40 mm bis 1,80 mm, vorzugsweise 1,60 mm, aufweisen.

19. Bremsbelagträgerplatte nach einem der vorhergehenden Ansprüche, **dadurch gekennzeichnet, dass** die Vorsprünge (3) in einem Winkel α von etwa 80° bis 84° zur Oberfläche (54) der Bremsbelagträgerplatte (1), vorzugsweise in Richtung zur jeweils zugeordneten Vertiefung (4), ausgerichtet sind.

20. Bremsbelagträgerplatte nach einem der vorhergehenden Ansprüche, **dadurch gekennzeichnet, dass** sie gekrümmt oder im Wesentlichen flach ausgebildet sind.

## Claims

1. Brake lining carrier plate (1) for holding a friction lining, particularly for installation in a vehicle brake system, with retaining structures (15), which are arranged in rows (6) on the lining side (2), for the friction lining, wherein each retaining structure (15) comprises a depression (4) and a projection (3), which with formation of the depression (4) is produced by material displacement in the surface (5) and comes into engagement with the friction lining, and projection (3) and depression (4) lie one behind the other in the direction of the rows (6), **characterised in that** the retaining structures (15) are so arranged in the rows (6) that a projection (10) is disposed at the outwardly facing end (8; 9) or ends (8, 9) of each row (6).

2. Brake lining carrier plate according to claim 1, **characterised in that** the rows (6) have at least two sections (12, 13) with arrangement of projection (3) and depression (4) of the retaining structures (15) in opposite sense.

3. Brake lining carrier plate according to claim 1 or 2, **characterised in that** the rows (6) extend substantially transversely to the longitudinal axis (7) of the brake lining carrier plate (1).

4. Brake lining carrier plate according to claim 1 or 2, **characterised in that** the rows (6) extend substantially in the direction of the longitudinal axis (7) of the brake lining carrier plate (1).

5. Brake lining carrier plate (1) according to one of the preceding claims, **characterised in that** the rows (6) are oriented in fan shape in their longitudinal direction.

6. Brake lining carrier plate according to claim 5, **characterised in that** in the case of rows (6) extending substantially in transverse direction of the brake lining carrier plate (1) these diverge outwardly in radial direction with respect to the installed position of the brake lining carrier plate (1).

7. Brake lining carrier plate according to claim 6, **characterised in that** the position of projection (3) and depression (4) of the retaining structures (15) alternates between adjacent rows (6).

8. Brake lining carrier plate according to claim 7, **characterised in that** in the case of retaining structures (15), which are arranged in opposite sense, of adjacent rows (6) as seen in the production direction of the retaining structures (15) the start (8) of each row (6) is offset relative to the end (9) of the respectively adjacent row (6) in direction towards the centre (14) of the brake lining carrier plate (1).

9. Brake lining carrier plate according to one of claims 6 to 8, **characterised in that** the retaining structures (15) of adjacent rows (6) are arranged offset relative to one another, wherein preferably coming into to lie in the region of the depressions (4) of a row (6) is in each instance a projection (3) of the respectively adjacent row.

10. Brake lining carrier plate according to one of claims 5 to 9, **characterised by** at least two regions (16, 17) with rows (6), which respectively run towards one another and which are oriented in fan shape, of retaining structures (15), wherein the retaining structures (15) of one region (16) are oriented in opposite sense to the retaining structures (15) of the other region (17).

11. Brake lining carrier plate according to claim 10, **characterised in that** the rows (6) of the two regions (16, 17) diverge in opposite direction or the same direction.

12. Brake lining carrier plate according to claim 10 or 11, **characterised in that** in the case of rows (6), which diverge in the same direction, of the two regions (16, 17) the rows (6) have substantially the same centre of convergency.

13. Brake lining carrier plate according to claim 10, **characterised in that** the rows (6) of the two regions (16, 17) diverge in direction towards the centre (14) of the brake lining carrier plate (1).

14. Brake lining carrier plate according one of claims 10 to 13, **characterised in that** the two regions (16, 17) intersect in the edge region (18) of their mutually facing sides (19) in such a manner that lying between the ends of adjacent rows (6) of one region (16) are the ends of the rows (6) of the other region (17).

15. Brake lining carrier plate according to one of claims 10 to 14, **characterised in that** at least two regions (16, 17) are arranged with mirror symmetry relative to the centre transverse axis and/or the centre longitudinal axis of the brake lining carrier plate.

16. Brake lining carrier plate according to one of the preceding claims, **characterised in that** the mutually adjoining retaining structures (15) of adjacent rows (6) respectively lie on one radius (11).

17. Brake lining carrier plate according to one of the preceding claims, **characterised in that** the retaining structures (15) are arranged at least in the edge region of the brake lining and preferably adjoin at the edge of the brake lining.

18. Brake lining carrier plate according to one of the preceding claims, **characterised in that** the projections (3) have a height h of 1.40 millimetres to 1.80 millimetres, preferably 1.60 millimetres.

19. Brake lining carrier plate according to one of the preceding claims, **characterised in that** the projections (3) are oriented at an angle α of approximately 80° to 84° relative to the surface (54) of the brake lining carrier plate (1), preferably in direction towards the respectively associated depression (4).

20. Brake lining carrier plate according to one of the preceding claims, **characterised in that** it is formed to be curved or substantially flat.

## Revendications

1. Plateau support pour plaquette de frein (1) permettant de maintenir une garniture de friction, en particulier devant être monté dans un système de freinage automobile, comportant des structures de maintien (15) pour la garniture de friction disposées en rangées (6) sur le côté plaquette (2), chaque structure de maintien (15) présentant un renfoncement (4) et une saillie (3), qui est produite dans la surface (5) en formant le renfoncement (4) par déplacement de matière et qui entre en prise avec la garniture de friction, et la saillie (3) et le renfoncement (4) se trouvent l'un derrière l'autre dans le sens des rangées (6), **caractérisé en ce que** les structures de maintien (15) sont disposées de telle sorte dans les rangées (6) qu'au niveau de l'extrémité (8 ; 9) ou des extrémités (8, 9) orientées vers l'extérieur de chaque rangée (6) se trouve une saillie (10).

2. Plateau support pour plaquette de frein selon la revendication 1, **caractérisé en ce que** les rangées (6) présentent au moins deux sections (12, 13) ayant un agencement opposé de saillies (3) et de renfoncements (4) des structures de maintien (15).

3. Plateau support pour plaquette de frein selon la revendication 1 ou 2, **caractérisé en ce que** les rangées (6) s'étendent sensiblement transversalement par rapport à l'axe longitudinal (7) du plateau support pour plaquette de frein (1).

4. Plateau support pour plaquette de frein selon la revendication 1 ou 2, **caractérisé en ce que** les rangées (6) s'étendent sensiblement dans la direction de l'axe longitudinal (7) du plateau support pour plaquette de frein (1).

5. Plateau support pour plaquette de frein (1) selon l'une quelconque des revendications précédentes, **caractérisé en ce que** les rangées (6) sont orientées à la manière d'un éventail dans le sens de leur longueur.

6. Plateau support pour plaquette de frein selon la revendication (5) **caractérisé en ce que**, dans les rangées (6) s'étendant sensiblement dans la direction transversale du panneau de support pour plaquettes de frein (1), ces rangées (6) divergent dans la direction radiale vers l'extérieur par rapport à la position de montage du plateau support pour plaquette de frein (1).

7. Plateau support pour plaquette de frein selon la revendication 6, **caractérisé en ce que** la position de la saillie (3) et du renfoncement (4) des structures de maintien (5) est alternée entre les rangées voisines (6).

8. Plateau support pour plaquette de frein selon la revendication 7, **caractérisé en ce que**, dans les structures de maintien (15) disposées à l'opposé des rangées voisines (6), vu dans le sens de fabrication des structures de maintien (15), le début (8) de chaque rangée (6) est décalé par rapport à la fin (9) de la rangée respectivement voisine (6) en direction du centre (14) du plateau support pour plaquette de frein (1).

9. Plateau support pour plaquette de frein selon l'une quelconque des revendications 6 à 8, **caractérisé en ce que** les structures de maintien (15) des rangées voisines (6) sont disposées en étant décalées les unes par rapport aux autres, sachant que de préférence, dans la zone des renfoncements (4) d'une rangée (6), vient en place respectivement une saillie (3) de la rangée respectivement voisine.

10. Plateau support pour plaquette de frein selon l'une quelconque des revendications 5 à 9, **caractérisé en ce qu'**il comporte au moins deux zones (16, 17) présentant respectivement des rangées (6) de structures de maintien (15) s'étendant les unes au-dessus des autres, orientées à la manière d'un éventail, les structures de maintien (15) d'une zone (16) étant orientées à l'opposé des structures de maintien (15) de l'autre zone (17).

11. Plateau support pour plaquette de frein selon la revendication 10, **caractérisé en ce que** les rangées (6) des deux zones (16, 17) divergent dans une direction opposée ou identique.

12. Plateau support pour plaquette de frein selon la revendication 10 ou 11, **caractérisé en ce que**, pour les rangées (6) divergeant dans la même direction des deux zones (16, 17), les rangées (6) présentent un centre de convergence sensiblement identique.

13. Plateau support pour plaquette de frein selon la revendication 10, **caractérisé en ce que** les rangées (6) des deux zones (16, 17) divergent en direction du centre (14) du plateau support pour plaquette de frein (1).

14. Plateau support pour plaquette de frein selon l'une quelconque des revendications 10 à 13, **caractérisé en ce que** les deux zones (16, 17) se coupent dans la zone périphérique (18) de leurs côtés orientés l'un vers l'autre (19) de telle sorte que, entre les extrémités des rangées voisines (6) d'une zone (16), se trouvent les extrémités des rangées (6) de l'autre zone (17).

15. Plateau support pour plaquette de frein selon l'une quelconque des revendications 10 à 14, **caractérisé en ce que** les au moins deux zones (16, 17) sont symétriques par rapport à l'axe transversal médian et/ou par rapport à l'axe longitudinal médian du plateau support pour plaquette de frein.

16. Plateau support pour plaquette de frein selon l'une quelconque des revendications précédentes, **caractérisé en ce que** les structures de maintien (15) adjacentes les unes aux autres de rangées voisines (6) se trouvent respectivement sur un rayon (11).

17. Plateau support pour plaquette de frein selon l'une quelconque des revendications précédentes, **caractérisé en ce que** les structures de maintien (15) sont disposées au moins dans la zone périphérique de la garniture de friction et sont de préférence adjacentes au bord de la garniture de friction.

18. Plateau support pour plaquette de frein selon l'une quelconque des revendications précédentes, **caractérisé en ce que** les saillies (3) ont une hauteur h comprise 1,40 mm et 1,80 mm, et de préférence égale à 1,60 mm.

19. Plateau support pour plaquette de frein selon l'une quelconque des revendications précédentes, **caractérisé en ce que** les saillies (3) sont orientées selon un angle α compris entre environ 80° et 84° par rapport à surface (54) du plateau support pour plaquette de frein (1), de préférence en direction d'un renfoncement (4) respectivement associé.

20. Plateau support pour plaquette de frein selon l'une quelconque des revendications précédentes, **caractérisé en ce qu'**il est configuré de manière incurvée ou sensiblement plane.
